# EUROPEAN PATENT SPECIFICATION

(11) **EP 2 469 412 B1**
(45) Date of publication and mention of the grant of the patent: **29.08.2018**
(21) Application number: 11194220.7
(22) Date of filing: 19.12.2011
(51) Int. Cl.: G06F 11/10

(54) **Methods and system for verifying memory device integrity**
Verfahren und System zur Verifizierung der Integrität einer Speichervorrichtung
Procédés et système de vérification d'intégrité de dispositif de mémoire

(30) Priority: 21.12.2010 US 974587
(43) Date of publication of application: 27.06.2012
(73) Proprietor: UTC Fire & Security Americas Corporation, Inc., Bradenton, FL 34202 (US)
(72) Inventor: Potter, Timothy Steven, Bradenton, FL Florida 34211 (US); Becker, Donald, Bradenton, FL Florida 34202 (US); Montgormery, Bruce, Jr., Venice, FL Florida 34293 (US); Dopson, Dave, Bradenton, FL Florida 34202 (US)
(74) Representative: Dehns

(56) References cited:
- US-A1- 2003 023 933
- US-A1- 2003 140 299
- US-A1- 2004 015 748
- US-A1- 2009 013 192
- US-B1- 6 678 837

## Description

### BACKGROUND OF THE INVENTION

### Field of the Invention

The embodiments described herein relate generally to verifying memory device integrity and, more particularly, to memory verification in an online computing device.

### Description of Related Art

It is known to use checksum-based systems to verify the integrity of computer memory in limited scenarios. For example, error-correcting code (ECC) random access memory (RAM) detects memory errors but performs such error detection only as specific portions of the memory are accessed. It is also known to verify memory integrity in an offline mode, such as by executing a memory test utility in place of a conventional operating system.

US2003/0023933 discloses a checksumming technique for detecting data corruption during read requests from a data storage device.

US 6678837 discloses a method for providing integrity of processor control codes in a processing unit.

However, existing systems and methods do not provide for continuous memory verification while a computer is online, executing one or more application programs within a demand paged operating system. Especially in computing devices where high reliability over an extended period is required, verification of proper memory device function is essential. For example, some high-reliability systems operate for months or years with little activity but are expected to function flawlessly in an emergency. Accordingly, a need exists for continuous online memory verification in a computing device.

### BRIEF SUMMARY OF THE INVENTION

In one aspect, the present invention provides a method for validating an eligibility for checksum verification of a memory device within an embedded demand paged memory operating system environment as claimed in claim 1.

In another aspect, the present invention provides a system for validating an eligibility for checksum verification of a memory device as claimed in claim 5.

In yet another aspect, the present invention provides one or more computer-readable storage media as claimed in claim 9.

### BRIEF DESCRIPTION OF THE SEVERAL VIEWS OF THE DRAWINGS

Figs. 1-5 show exemplary embodiments of the systems and methods described herein.
FIG. 1 is a block diagram of a system with a computing device having a memory device.
FIG. 2 is a flowchart of an exemplary method for validating an eligibility for verification of the memory device shown in FIG. 1.
FIG. 3 is a block diagram of memory blocks within the memory device shown in FIG. 1.
FIG. 4 is a flowchart of an exemplary method for determining whether read-only data is contained in the memory block shown in FIG. 3.
FIG. 5 is block diagram of a system including a monitoring computing device coupled in communication with a plurality of monitored computing devices via a network.

### DETAILED DESCRIPTION OF THE INVENTION

Embodiments of the systems and methods described herein facilitate continuously verifying memory device integrity within an online computing device. While some embodiments are described in connection with pages of memory mapped to files within a storage device, the embodiments provided herein are operable with any form of memory device. Moreover, the term "file" is used herein to include, without limitation, any collection of non-volatile information, such as an executable application, an operating system image and/or object, a dynamically linked shared code library, and/or fixed parameter data, whether local or remote to a computing device, suitable for use with the methods described herein.

Furthermore, such embodiments facilitate continuous memory device verification without intercepting write operations to the memory device and without direct modification to executable instructions of an operating system (OS) kernel. In the exemplary embodiment, a Linux OS is used, however any OS may be used to allow the disclosure to function as described herein. For example, at least some of the operations described herein may be executed by a loadable kernel module that interacts with an operating system kernel and/or by a utility application that executes in "userspace" (i.e., with privileges assigned to a user of the computing device).

A technical effect of the systems and methods described herein may include one or more of the following: (a) identifying a memory block corresponding to at least one memory location within a memory device, the memory block associated with a first portion of a first file to which the memory block is mapped at a first time and a prior checksum representing data within the memory block at the first time; (b) determining whether the memory block is eligible for verification; and (c) based at least in part on determining that the memory block is eligible for verification, indicating an eligibility result.

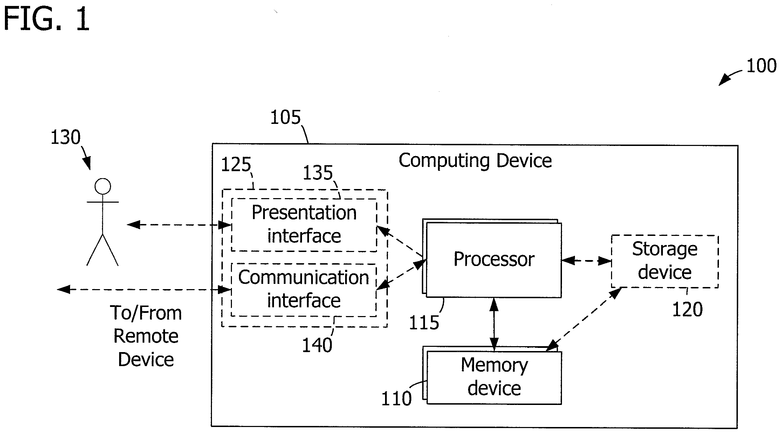

FIG. 1 is a block diagram of a system 100 with a computing device 105. Computing device 105 includes a memory device 110 and, coupled to memory device 110, a processor 115 for executing instructions. In some embodiments, executable instructions are stored in memory device 110. Computing device 105 is configurable to perform one or more operations described herein by programming processor 115. For example, processor 115 may be programmed by encoding an operation as one or more executable instructions and providing the executable instructions in memory device 110. Processor 115 may include one or more processing units (e.g., in a multicore configuration).

Memory device 110 is one or more devices allowing information such as executable instructions and/or other data to be stored and retrieved. Memory device 110 may include one or more computer readable media, such as, but not limited to, dynamic random access memory (DRAM) and/or static random access memory (SRAM).

Computing device 105 may also include a storage device 120. Like memory device 110, storage device 120 allows data to be stored and retrieved. Storage device 120 is coupled to processor 115 and, optionally, to memory device 110. For example, computing device 105 may provide direct memory access (DMA) between storage device 120 and memory device 110. Storage device 120 may include one or more computer readable media, such as, but not limited to, a solid state disk, a hard disk, battery backed SRAM, and/or a flash memory device. Memory device 110 and/or storage device 120 may be configured to store, without limitation, executable instructions corresponding to an operating system (OS) (e.g., an OS kernel and/or a kernel module), executable instructions corresponding to an application program, configuration data, program data, a dynamically linked shared code library, and/or any other type of data. Storage device 120 may have a larger memory capacity than a memory capacity of memory device 110.

In some embodiments, memory device 110 is configured to store a copy of at least a portion of data stored within storage device 120. For example, memory device 110 may be configured to store a copy of executable instructions stored within storage device 120, and processor 115 may be configured to access and execute the executable instructions from memory device 110.

Computing device 105 also includes at least one notification interface 125 configured to interact with a user 130 and/or a remote device (not shown in FIG. 1). In some embodiments, notification interface 125 includes a presentation interface 135 coupled to processor 115. Presentation interface 135 is configured to present information, such as a verification failure and/or a verification success, to user 130. For example, presentation interface 135 may include a display adapter (not shown in FIG. 1), which is configured to be coupled to a display device, such as a light emitting diode (LED) indicator, a cathode ray tube (CRT), a liquid crystal display (LCD), an organic LED (OLED) display, and/or an "electronic ink" display. In some embodiments, presentation interface 135 includes one or more display devices.

In addition, or alternatively, presentation interface 135 may include an audio adapter (not shown in FIG. 1), which is configured to be coupled to an audio device, such as a loudspeaker. In some embodiments, presentation interface 135 includes one or more audio devices.

In some embodiments, notification interface 125 includes a communication interface 140 coupled to processor 115. Communication interface 140 is configured to be coupled in communication with a remote device, such as another computing device 105. For example, communication interface 140 may include, without limitation, a wired network adapter, a wireless network adapter, and/or a mobile telecommunications adapter.

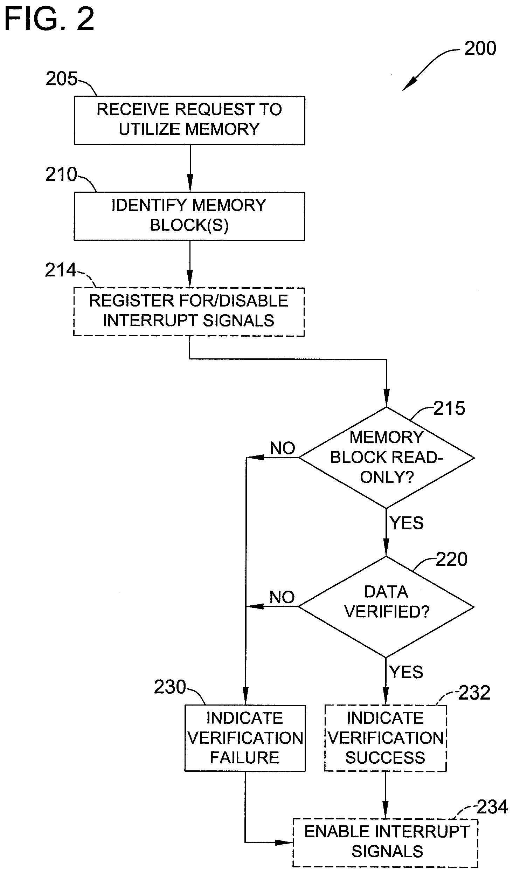

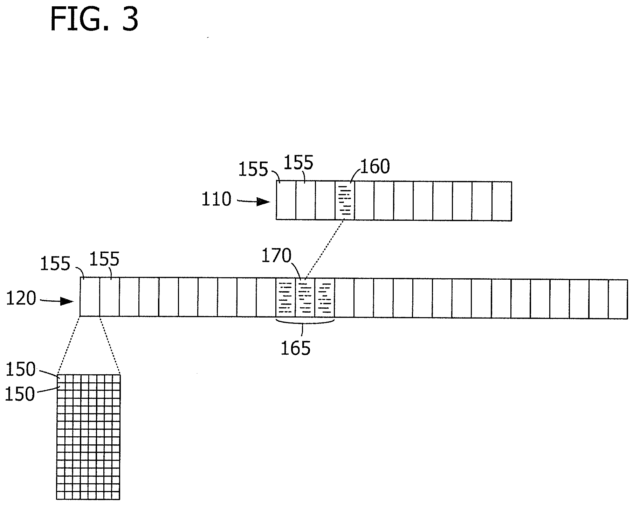

FIG. 2 is a flowchart of an exemplary method 200 for validating an eligibility for verification of a memory device 110. Method 200 is described with reference to FIG. 3, a block diagram of data within memory device 110 and storage device 120. Memory device 110 and storage device 120 each include a plurality of memory locations 150. For example, each memory location 150 may correspond to one byte of data within memory device 110 and/or storage device 120. Multiple memory locations 150 are organized into memory blocks 155. For example, in memory device 110, a memory block 155 may be referred to as a "page" of memory. In one embodiment, a page of memory corresponds to 4096 memory locations 150, or four kilobytes (4 kB), although other page sizes are also contemplated.

Method 200 includes receiving 205 a request from an application being executed by processor 115, the request to utilize at least one memory location 150 within memory device 110. Method 200, then includes identifying 210, by processor 115, at least one memory block 160 of memory blocks 155 corresponding to at least one memory location 150 within memory device 110. For example, memory blocks 155 corresponding to all memory locations 150 within memory device 110 may be identified 210. In another example, identifying 210 memory block 160 includes receiving an address corresponding to a memory location 150 within memory device 110 and identifying memory block 160, which corresponds to (e.g., includes) memory location 150. Memory block 160 may be identified 210 based, at least in part, on a predefined memory block size, such as a page size.

In some embodiments, memory block 160 is a page of virtual memory corresponding to one or more memory locations 150 within memory device 110. The one or more memory locations 150 correspond to one or more memory locations 150 within storage device 120.

In addition, or alternatively, one or more memory blocks 155 corresponding to a single file 165 may be identified 210. As shown in FIG. 3, memory block 160 represents a portion 170 of file 165. The remainder of file 165 is also stored within storage device 120 but is not copied into memory device 110. Identifying 210 memory block 160 may include receiving a file reference that indicates file 165 and identifying memory blocks 155 within memory device 110 that are associated with file 165.

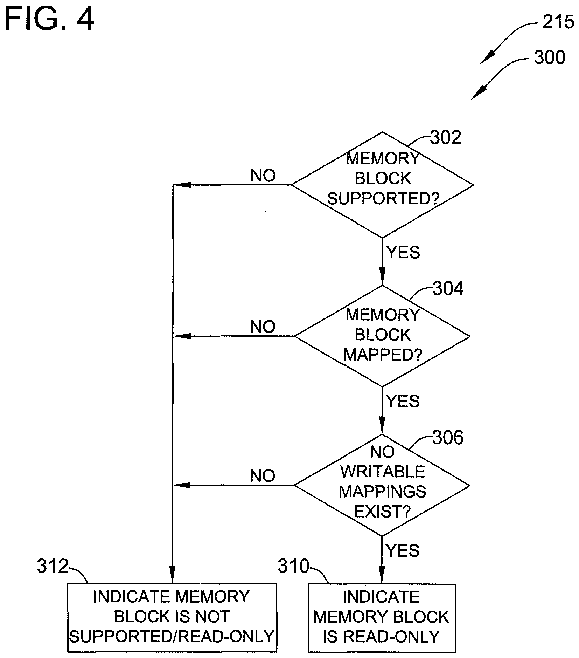

In the exemplary embodiment, processor 115 determines 215 whether memory block is designated read-only, as described below with regard to FIG. 4. A verification 220 of the data within memory block 160 is performed by processor 115 based at least in part on data within memory block 160. For example, processor 115 may perform a checksum of the data within memory block 160 and compare the value against previous checksums performed by processor 115.

When memory block 160 is designated 215 read-only, and the verification 220 of the data within memory block 160 does not represent expected data within memory block 160 (e.g. is not verified), a verification failure may be indicated 230 by presenting a visible alarm via presentation interface 135, by presenting an audible alarm via presentation interface 135, and/or by transmitting a verification failure message via communication interface 140.

In some embodiments, method 200 tracks successful verification of memory block 160. If the memory block 160 is designated 215 read-only, and the verification 220 of the data within memory block 160 is verified, a verification success is indicated 232.

If multiple memory blocks 155 are identified 210, method 200 may include performing the step(s) of determining 215 whether memory block 160 is designated read-only, verifying 220 data within memory block 160, and/or indicating 230 a verification failure for each identified memory block 155. Prior to processing each identified memory block 155, method 200 may include delaying or "sleeping" for a short duration (e.g., from approximately one millisecond to approximately one second). Such an embodiment facilitates allowing processor 115 to perform operations other than those included in method 200.

Some embodiments facilitate continuous verification of one or more memory blocks 155 of memory device 110. For example, method 200 may be repeated continuously, periodically, or according to any suitable timing. Prior to identifying 210 memory blocks 155, method 200 may include delaying or sleeping for a short period, as described above.

Some embodiments facilitate preventing false verification failures arising from concurrent access to memory block 160. In one embodiment, prior to determining 215 whether memory block 160 is designated read-only, interrupt signals are disabled 214 within processor 115. After verifying 225 data within memory block 160, interrupt signals are enabled 234 in processor 115. In an alternative embodiment, method 200 includes registering 214 for notification of interrupt signals within processor 115. When a notification of an interrupt signal is received after determining 215 whether memory block 160 is designated read-only, processing of memory block 160 is aborted. For example, processor 115 may be programmed to abort verifying 220 data within memory block 160, if memory block 160 is determined 215 to be writeable (e.g. not read-only).

FIG. 4 is a flowchart of an exemplary method 300 for determining 215 whether a memory block 160 is read-only. In an exemplary embodiment, processor 115 is programmed to determine 215 whether memory block is designated read-only. For example, processor 115 may be programmed to associate metadata with memory block 160 to determine 215 whether memory block 160 is read-only based on the metadata.

In the exemplary embodiment, processor 115 determines 302 whether memory block 160 is not supported in method 300 based on the metadata. In the exemplary embodiment, memory-block 160 is determined 302 to be non-supported when metadata includes at least one of page types that are slab pages, compound pages, and mapped anonymous pages that are not backed by a file. Slab pages are used to cache kernel memory objects, which are often writeable and have the ability to change content. Compound pages are large multi-page regions, and mapped anonymous pages that are not backed by a file are often writable and difficult to count writable mappings. Processor 115 may be programmed to indicate 312, based at least in part on determining 302, that memory block 160 is not supported by method 300.

If memory block 160 is supported by method 300, processor 115 determines 304 whether memory block 160 is mapped. Processor 115 is programmed to determine 304 whether a value is associated with a page mapping field, such that the page mapping field is not NULL. If processor 115 determines 304 that page mapping field contains a NULL value (e.g. is not mapped), processor 115 may be programmed to indicate 312, that memory block 160 is not supported.

When processor 115 determines 302 that memory block 160 is supported by method 300 and determines 304 that memory block 160 includes a valid page mapping, processor 115 determines 306 if memory block 160 contains any active writable mappings. In determining 306 whether memory block 160 contains any active writable mappings, processor 115 is programmed to validate whether a write counter, for a page mapping, is unable to increment, thus making memory block 160 read-only. If processor 115, determines 306 that memory block 160 is read-only, an indication 310 is provided that memory block 160 is read-only and eligible for verification 220. Alternatively, if processor 115 determines 306 that active writable mappings are associated with memory block 160, processor 115 may be programmed to indicate 312, that memory block 160 is not read-only.

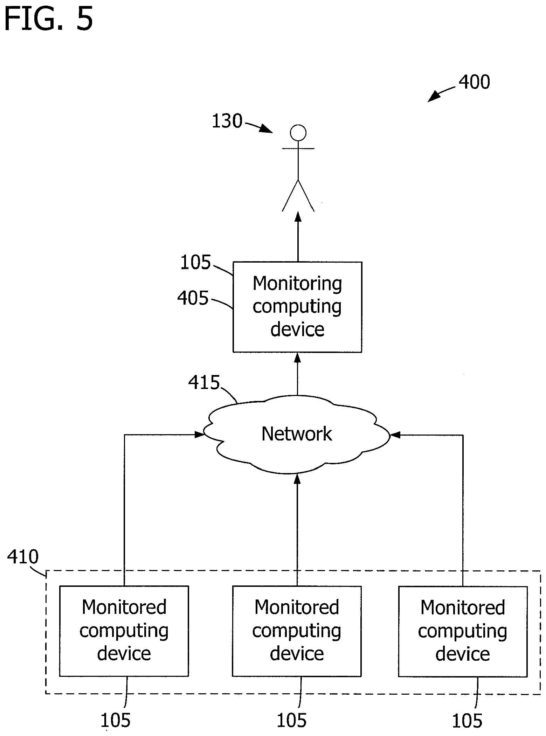

FIG. 5 is a block diagram of a system 400 including a monitoring computing device 405 coupled in communication with a plurality of monitored computing devices 410 via a network 415. For example, monitoring computing device 405 and monitored computing devices 410 may be coupled to network 415 via communication interfaces 140 (shown in FIG. 1). Network 415 may include, without limitation, the Internet, a local area network (LAN), a wide area network (WAN), a wireless LAN (WLAN), a mesh network, and/or a virtual private network (VPN).

In the exemplary embodiment, monitored computing devices 410 are configured to transmit verification failure messages and/or verification success messages to monitoring computing device 405. Monitoring computing device 405 is configured to receive verification failure messages and/or verification success messages and to indicate corresponding verification failures and/or verification successes, respectively, to user 130 via presentation interface 135 (shown in FIG. 1). Such an embodiment facilitates remote monitoring of a plurality of computing devices 105.

Exemplary embodiments of methods, systems, and computer-readable storage media for use in implementing a memory verification system are described above in detail. The methods, systems, and storage media are not limited to the specific embodiments described herein but, rather, operations of the methods and/or components of the system may be utilized independently and separately from other operations and/or components described herein. Further, the described operations and/or components may also be defined in, or used in combination with, other systems, methods, and/or storage media, and are not limited to practice with only the methods, systems, and storage media as described herein.

A computing device, such as those described herein, includes at least one processor or processing unit and a system memory. The computing device typically has at least some form of computer readable media. By way of example and not limitation, computer readable media include computer storage media and communication media. Computer storage media include volatile and nonvolatile, removable and non-removable physical media implemented in any method or technology for storage of information such as computer readable instructions, data structures, program modules, or other data. Communication media typically embody computer readable instructions, data structures, program modules, or other data in a modulated data signal such as a carrier wave or other transport mechanism and include any information delivery media. Those skilled in the art are familiar with the modulated data signal, which has one or more of its characteristics set or changed in such a manner as to encode information in the signal. Combinations of any of the above are also included within the scope of computer readable media.

The methods described herein may be encoded as executable instructions embodied in a computer readable medium, including, without limitation, a computer storage medium, a storage device, and/or a memory device. Such instructions, when executed by a processor, cause the processor to perform at least a portion of the methods described herein.

Although the present invention is described in connection with an exemplary memory verification system environment, embodiments of the invention are operational with numerous other general purpose or special purpose memory verification system environments or configurations. The memory verification system environment is not intended to suggest any limitation as to the scope of use or functionality of any aspect of the invention. Moreover, the memory verification system environment should not be interpreted as having any dependency or requirement relating to any one or combination of components illustrated in the exemplary operating environment. Examples of well known memory verification systems, environments, and/or configurations that may be suitable for use with the embodiments described herein include, but are not limited to, embedded computing devices, personal computers, server computers, hand-held or laptop devices, multiprocessor systems, microprocessor-based systems, set top boxes, programmable consumer electronics, mobile telephones, network PCs, minicomputers, mainframe computers, distributed computing environments that include any of the above systems or devices, and the like.

Embodiments may be described in the general context of computer-executable instructions, such as program components or modules, executed by one or more computers or other devices. Aspects of the invention may be implemented with any number and organization of components or modules. For example, embodiments are not limited to the specific computer-executable instructions or the specific components or modules illustrated in the figures and described herein. Alternative embodiments may include different computer-executable instructions or components having more or less functionality than illustrated and described herein.

The order of execution or performance of the operations in the embodiments illustrated and described herein is not essential, unless otherwise specified. That is, the operations may be performed in any order, unless otherwise specified, and embodiments may include additional or fewer operations than those disclosed herein. For example, it is contemplated that executing or performing a particular operation before, contemporaneously with, or after another operation is within the scope of the described embodiments.

Although specific features of various embodiments of the invention may be shown in some drawings and not in others, this is for convenience only. In accordance with the principles of the invention, any feature of a drawing may be referenced and/or claimed in combination with any feature of any other drawing.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art.

## Claims

1. A method for validating an eligibility for checksum verification of a memory device (110) within an embedded demand paged memory operating system environment, the method comprising:
receiving a request to utilize at least one memory location (150) included in the memory device (110) from an application being executed by a processor (115) coupled to the memory device (110);
identifying, by the processor (115), at least one memory block (160) corresponding to at least one memory location (150) within the memory device (110), wherein multiple memory locations (150) are organized into memory blocks (160);
determining, by the processor (115), whether the at least one memory block (160) is eligible for checksum verification, wherein determining whether the at least one memory block (160) is eligible for checksum verification comprises determining whether the at least one memory block (160) is writable; and
producing an eligibility result based on the determination by the processor (115).

2. A method in accordance with Claim 1, further comprising, determining whether the at least one memory block (160) is a memory block type, including at least a compound page.

3. A method in accordance with Claim 1 or 2, further comprising, determining a content type of the at least one memory block (160), including at least a kernel object cache.

4. A method in accordance with Claim 1, 2 or 3, further comprising, determining whether the at least one memory block (160) comprises an anonymous page.

5. A system for validating an eligibility for checksum verification of a memory device (110) within an embedded demand paged memory operating system environment, the system comprising:
a memory device (110) comprising a plurality of memory locations (150) comprising a plurality of memory blocks (155) corresponding to one or more memory locations of the plurality of memory locations (150);
a processor (115) coupled to the memory device (110), the processor (115) programmed to:
receive a request from an application being executed by the processor (115), the request to utilize at least one memory location (150);
identify at least one memory block (160) corresponding to at least one memory location (150) within the memory device (110);
determine whether the at least one memory block (160) is eligible for checksum verification, wherein determining whether the at least one memory block (160) is eligible for checksum verification comprises determining whether the at least one memory block (160) is writable; and
produce an eligibility result based on the determination by the processor (115).

6. A system in accordance with Claim 5, wherein the processor (115) is further programmed to determine whether the at least one memory block (160) is a memory block type, such that the memory block type includes at least a compound page.

7. A system in accordance with Claim 5 or 6, wherein the processor (115) is further programmed to determine a content type of the at least one memory block (160), such that the content type includes at least a kernel object cache.

8. A system in accordance with Claim 5, 6 or 7, wherein the processor (115) is further programmed to determine whether the at least one memory block (160) comprises an anonymous page.

9. One or more computer-readable storage media having computer-executable components for validating an eligibility for checksum verification of a memory device (110) within an embedded demand paged memory operating system environment, the components comprising:
a control component that when executed by the at least one processor (115) causes the at least one processor (115) to:
receive a request from an application, being executed by the processor (115), to utilize at least one memory location (150) included in the memory device (110); and
identify at least one memory block (160) corresponding to at least one memory location (150) within the memory device (110), wherein multiple memory locations (150) are organized into memory blocks (160);
a validation component that when executed by the at least one processor (115) causes the at least one processor (115) to:
determine whether the at least one memory block (160) is eligible for checksum verification, wherein determining whether the at least one memory block (160) is eligible for checksum verification comprises determining whether the at least one memory block (160) is writable; and
a notification component that when executed by the at least one processor (115) causes the at least one processor (115) to:
produce an eligibility result based on the determination by the processor (115).

10. One or more computer-readable storage media in accordance with Claim 9, wherein the validation component, when executed by the at least one processor (115) further causes the at least one processor (115) to determine whether the at least one memory block (160) is a memory block type, such that the memory block type includes at least a compound page.

11. One or more computer-readable storage media in accordance with Claim 9 or 10, wherein the validation component, when executed by the at least one processor (115) further causes the at least one processor (115) to determine a content type of the at least one memory block (160), such that the content type includes at least a kernel object cache.

12. One or more computer-readable storage media in accordance with Claim 9, 10 or 11, wherein the validation component when executed by the at least one processor (115) further causes the at least one processor (115) to determine whether the at least one memory block (160) comprises an anonymous page.

13. A method, a system, or one or more computer-readable storage media in accordance with any one of the preceding claims, wherein determining whether the at least one memory block (160) is eligible for verification comprises determining whether the at least one memory block (160) is mapped to a file (165).

14. A method, a system, or one or more computer-readable storage media in accordance with any one of the preceding claims, wherein determining whether the at least one memory block (160) is eligible for verification comprises determining whether the at least one memory block (160) is NULL.

15. A method, a system, or one or more computer-readable storage media in accordance with any one of the preceding claims, wherein determining whether the at least one memory block (160) is writable comprises validating by the processor (115) whether or not a write counter for a page mapping is able to increment, the memory block (160) being determined to be read-only if the write counter is unable to increment.

## Patentansprüche

1. Verfahren zur Validierung einer Berechtigung zur Prüfsummenverifizierung einer Speichervorrichtung (110) innerhalb einer Umgebung eines Betriebssystems mit eingebettetem Speicher mit Seitenabruf, wobei das Verfahren Folgendes umfasst:
Empfangen einer Aufforderung zur Verwendung von zumindest einem Speicherort (150), der in der Speichervorrichtung (110) enthalten ist, von einer Anwendung, die durch einen Prozessor (115) ausgeführt wird, der an die Speichervorrichtung (110) gekoppelt ist;
Identifizieren, durch den Prozessor (115), von zumindest einem Speicherblock (160) entsprechend zumindest einem Speicherort (150) innerhalb der Speichervorrichtung (110), wobei mehrere Speicherorte (150) zu Speicherblöcken (160) organisiert sind; Bestimmen, durch den Prozessor (115), ob der zumindest eine Speicherblock (160) zur Prüfsummenverifizierung berechtigt ist, wobei das Bestimmen, ob der zumindest eine Speicherblock (160) zur Prüfsummenverifizierung berechtigt ist, das Bestimmen umfasst, ob der zumindest eine Speicherblock (160) beschreibbar ist; und
Erzeugen eines Berechtigungsergebnisses auf Grundlage der Bestimmung durch den Prozessor (115).

2. Verfahren nach Anspruch 1, ferner umfassend das Bestimmen, ob der zumindest eine Speicherblock (160) ein Speicherblocktyp ist, zumindest eine zusammengesetzte Seite beinhaltend.

3. Verfahren nach Anspruch 1 oder 2, ferner umfassend das Bestimmen eines Inhaltstyps des zumindest einen Speicherblocks (160), zumindest einen Kernel-Objekt-Cache beinhaltend.

4. Verfahren nach Anspruch 1, 2 oder 3, ferner umfassend das Bestimmen, ob der zumindest eine Speicherblock (160) eine anonyme Seite umfasst.

5. System zur Validierung einer Berechtigung zur Prüfsummenverifizierung einer Speichervorrichtung (110) innerhalb einer Umgebung eines Betriebssystems mit eingebettetem Speicher mit Seitenabruf, wobei das System Folgendes umfasst:
eine Speichervorrichtung (110) umfassend eine Vielzahl von Speicherorten (150), die eine Vielzahl von Speicherblöcken (155) umfassen, die einem oder mehreren Speicherorten aus der Vielzahl von Speicherorten (150) entsprechen;
einen Prozessor (115), der an die Speichervorrichtung (110) gekoppelt ist, wobei der Prozessor (115) für Folgendes programmiert ist:
Empfangen einer Aufforderung von einer Anwendung, die durch den Prozessor (115) ausgeführt wird, wobei die Aufforderung lautet, zumindest einen Speicherort (150) zu verwenden;
Identifizieren von zumindest einem Speicherblock (160) entsprechend zumindest einem Speicherort (150) innerhalb der Speichervorrichtung (110);
Bestimmen, ob der zumindest eine Speicherblock (160) zur Prüfsummenverifizierung berechtigt ist, wobei das Bestimmen, ob der zumindest eine Speicherblock (160) zur Prüfsummenverifizierung berechtigt ist, das Bestimmen umfasst, ob der zumindest eine Speicherblock (160) beschreibbar ist;
und
Erzeugen eines Berechtigungsergebnisses auf Grundlage der Bestimmung durch den Prozessor (115).

6. System nach Anspruch 5, wobei der Prozessor (115) ferner programmiert ist, um zu bestimmen, ob der zumindest eine Speicherblock (160) ein Speicherblocktyp ist, sodass der Speicherblocktyp zumindest eine zusammengesetzte Seite beinhaltet.

7. System nach Anspruch 5 oder 6, wobei der Prozessor (115) ferner programmiert ist, um einen Inhaltstyp des zumindest einen Speicherblocks (160) zu bestimmen, sodass der Inhaltstyp zumindest einen Kernel-Objekt-Cache beinhaltet.

8. System nach Anspruch 5, 6 oder 7, wobei der Prozessor (115) ferner programmiert ist, um zu bestimmen, ob der zumindest eine Speicherblock (160) eine anonyme Seite umfasst.

9. Ein oder mehrere computerlesbare Speichermedien, die computerausführbare Komponenten zur Validierung einer Berechtigung zur Prüfsummenverifizierung einer Speichervorrichtung (110) innerhalb einer Umgebung eines Betriebssystems mit eingebettetem Speicher mit Seitenabruf aufweisen, wobei die Komponenten Folgendes umfassen:
eine Steuerkomponente, die, wenn sie durch den zumindest einen Prozessor (115) ausgeführt wird, den zumindest einen Prozessor (115) zu Folgendem veranlasst:
Empfangen einer Aufforderung zur Verwendung von zumindest einem Speicherort (150), der in der Speichervorrichtung (110) enthalten ist, von einer Anwendung, die durch den Prozessor (115) ausgeführt wird; und
Identifizieren von zumindest einem Speicherblock (160) entsprechend zumindest einem Speicherort (150) innerhalb der Speichervorrichtung (110), wobei mehrere Speicherorte (150) zu Speicherblöcken (160) organisiert sind;
eine Validierungskomponente, die, wenn sie durch den zumindest einen Prozessor (115) ausgeführt wird, den zumindest einen Prozessor (115) zu Folgendem veranlasst:
Bestimmen, ob der zumindest eine Speicherblock (160) zur Prüfsummenverifizierung berechtigt ist, wobei das Bestimmen, ob der zumindest eine Speicherblock (160) zur Prüfsummenverifizierung berechtigt ist, das Bestimmen umfasst, ob der zumindest eine Speicherblock (160) beschreibbar ist;
und
eine Benachrichtigungskomponente, die, wenn sie durch den zumindest einen Prozessor (115) ausgeführt wird, den zumindest einen Prozessor (115) zu Folgendem veranlasst:
Erzeugen eines Berechtigungsergebnisses auf Grundlage der Bestimmung durch den Prozessor (115).

10. Ein oder mehrere computerlesbare Speichermedien nach Anspruch 9, wobei die Validierungskomponente, wenn sie durch den zumindest einen Prozessor (115) ausgeführt wird, den zumindest einen Prozessor (115) ferner dazu veranlasst, zu bestimmen, ob der zumindest eine Speicherblock (160) ein Speicherblocktyp ist, sodass der Speicherblocktyp zumindest eine zusammengesetzte Seite beinhaltet.

11. Ein oder mehrere computerlesbare Speichermedien nach Anspruch 9 oder 10, wobei die Validierungskomponente, wenn sie durch den zumindest einen Prozessor (115) ausgeführt wird, den zumindest einen Prozessor (115) ferner dazu veranlasst, einen Inhaltstyp des zumindest einen Speicherblocks (160) zu bestimmen, sodass der Inhaltstyp zumindest einen Kernel-Objekt-Cache beinhaltet.

12. Ein oder mehrere computerlesbare Speichermedien nach Anspruch 9, 10 oder 11, wobei die Validierungskomponente, wenn sie durch den zumindest einen Prozessor (115) ausgeführt wird, den zumindest einen Prozessor (115) ferner dazu veranlasst, zu bestimmen, ob der zumindest eine Speicherblock (160) eine anonyme Seite umfasst.

13. Verfahren, System oder ein oder mehrere computerlesbare Speichermedien nach einem der vorhergehenden Ansprüche, wobei das Bestimmen, ob der zumindest eine Speicherblock (160) zur Verifizierung berechtigt ist, das Bestimmen umfasst, ob der zumindest eine Speicherblock (160) einer Datei (165) zugeordnet ist.

14. Verfahren, System oder ein oder mehrere computerlesbare Speichermedien nach einem der vorhergehenden Ansprüche, wobei das Bestimmen, ob der zumindest eine Speicherblock (160) zur Verifizierung berechtigt ist, das Bestimmen umfasst, ob der zumindest eine Speicherblock (160) NULL ist.

15. Verfahren, System oder ein oder mehrere computerlesbare Speichermedien nach einem der vorhergehenden Ansprüche, wobei das Bestimmen, ob der zumindest eine Speicherblock (160) beschreibbar ist, die Validierung durch den Prozessor (115) umfasst, ob ein Schreibzähler für eine Seitenzuordnung zum Inkrementieren in der Lage ist oder nicht, wobei bestimmt wird, dass der Speicherblock (160) schreibgeschützt ist, wenn der Schreibzähler nicht zum Inkrementieren in der Lage ist.

## Revendications

1. Procédé de validation d'une éligibilité pour une vérification de somme de contrôle d'un dispositif de mémoire (110) à l'intérieur d'un environnement intégré de système d'exploitation de mémoire paginée à la demande, le procédé comprenant :
la réception d'une requête pour utiliser au moins un emplacement de mémoire (150) inclus dans le dispositif de mémoire (110) depuis une application étant exécutée par un processeur (115) couplé au dispositif de mémoire (110) ;
l'identification, par le processeur (115), d'au moins un bloc de mémoire (160) correspondant à au moins un emplacement de mémoire (150) à l'intérieur du dispositif de mémoire (110), dans lequel de multiples emplacements de mémoire (150) sont organisés en des blocs de mémoire (160) ;
le fait de déterminer, par le processeur (115), si l'au moins un bloc de mémoire (160) est éligible pour une vérification de somme de contrôle, dans lequel le fait de déterminer si l'au moins un bloc de mémoire (160) est éligible pour une vérification de somme de contrôle comprend le fait de déterminer si l'au moins un bloc de mémoire (160) peut être écrit ; et
la production d'un résultat d'éligibilité sur la base de la détermination par le processeur (115).

2. Procédé selon la revendication 1, comprenant en outre, le fait de déterminer si l'au moins un bloc de mémoire (160) est un type de bloc de mémoire, incluant au moins une page composée.

3. Procédé selon la revendication 1 ou 2, comprenant en outre, la détermination d'un type de contenu de l'au moins un bloc de mémoire (160), incluant au moins un cache d'objet de noyau.

4. Procédé selon la revendication 1, 2 ou 3, comprenant en outre, le fait de déterminer si l'au moins un bloc de mémoire (160) comprend une page anonyme.

5. Système de validation d'une éligibilité pour une vérification de somme de contrôle d'un dispositif de mémoire (110) à l'intérieur d'un environnement intégré de système d'exploitation de mémoire paginée à la demande, le système comprenant :
un dispositif de mémoire (110) comprenant une pluralité d'emplacements de mémoire (150) comprenant une pluralité de blocs de mémoire (155) correspondant à un ou plusieurs emplacements de mémoire de la pluralité d'emplacements de mémoire (150) ;
un processeur (115) couplé au dispositif de mémoire (110), le processeur (115) programmé pour :
recevoir une requête d'une application étant exécutée par le processeur (115), la requête pour utiliser au moins un emplacement de mémoire (150) ;
identifier au moins un bloc de mémoire (160) correspondant à au moins un emplacement de mémoire (150) à l'intérieur du dispositif de mémoire (110) ;
déterminer si l'au moins un bloc de mémoire (160) est éligible pour une vérification de somme de contrôle, dans lequel le fait de déterminer si l'au moins un bloc de mémoire (160) est éligible pour une vérification de somme de contrôle comprend le fait de déterminer si l'au moins un bloc de mémoire (160) peut être écrit ; et
produire un résultat d'éligibilité sur la base de la détermination par le processeur (115).

6. Système selon la revendication 5, dans lequel le processeur (115) est en outre programmé pour déterminer si l'au moins un bloc de mémoire (160) est un type de bloc de mémoire, de sorte que le type de bloc de mémoire inclut au moins une page composée.

7. Système selon la revendication 5 ou 6, dans lequel le processeur (115) est en outre programmé pour déterminer un type de contenu de l'au moins un bloc de mémoire (160), de sorte que le type de contenu inclut au moins un cache d'objet de noyau.

8. Système selon la revendication 5, 6 ou 7, dans lequel le processeur (115) est en outre programmé pour déterminer si l'au moins un bloc de mémoire (160) comprend une page anonyme.

9. Un ou plusieurs supports de stockage lisibles par ordinateur ayant des composants exécutables par ordinateur pour valider une éligibilité pour une vérification de somme de contrôle d'un dispositif de mémoire (110) à l'intérieur d'un environnement intégré de système d'exploitation de mémoire paginée à la demande, les composants comprenant :
un composant de commande qui, lorsqu'il est exécuté par l'au moins un processeur (115), amène l'au moins un processeur (115) à :
recevoir une requête d'une application, étant exécutée par le processeur (115), pour utiliser au moins un emplacement de mémoire (150) inclus dans le dispositif de mémoire (110) ; et
identifier au moins un bloc de mémoire (160) correspondant à au moins un emplacement de mémoire (150) à l'intérieur du dispositif de mémoire (110), dans lequel de multiples emplacements de mémoire (150) sont organisés en des blocs de mémoire (160) ;
un composant de validation qui, lorsqu'il est exécuté par l'au moins un processeur (115), amène l'au moins un processeur (115) à :
déterminer si l'au moins un bloc de mémoire (160) est éligible pour une vérification de somme de contrôle, dans lequel le fait de déterminer si l'au moins un bloc de mémoire (160) est éligible pour une vérification de somme de contrôle comprend le fait de déterminer si l'au moins un bloc de mémoire (160) peut être écrit ; et
un composant de notification qui, lorsqu'il est exécuté par l'au moins un processeur (115), amène l'au moins un processeur (115) à :
produire un résultat d'éligibilité sur la base de la détermination par le processeur (115).

10. Un ou plusieurs supports de stockage lisibles par ordinateur selon la revendication 9, dans lesquels le composant de validation, lorsqu'il est exécuté par l'au moins un processeur (115), amène en outre l'au moins un processeur (115) à déterminer si l'au moins un bloc de mémoire (160) est un type de bloc de mémoire, de sorte que le type de bloc de mémoire inclut au moins une page composée.

11. Un ou plusieurs supports de stockage lisibles par ordinateur selon la revendication 9 ou 10, dans lesquels le composant de validation, lorsqu'il est exécuté par l'au moins un processeur (115), amène en outre l'au moins un processeur (115) à déterminer un type de contenu de l'au moins un bloc de mémoire (160), de sorte que le type de contenu inclut au moins un cache d'objet de noyau.

12. Un ou plusieurs supports de stockage lisibles par ordinateur selon la revendication 9, 10 ou 11, dans lesquels le composant de validation, lorsqu'il est exécuté par l'au moins un processeur (115), amène en outre l'au moins un processeur (115) à déterminer si l'au moins un bloc de mémoire (160) comprend une page anonyme.

13. Procédé, système ou un ou plusieurs supports de stockage lisibles par ordinateur selon l'une quelconque des revendications précédentes, dans lesquels le fait de déterminer si l'au moins un bloc de mémoire (160) est éligible pour une vérification comprend le fait de déterminer si l'au moins un bloc de mémoire (160) est mappé à un fichier (165).

14. Procédé, système ou un ou plusieurs supports de stockage lisibles par ordinateur selon l'une quelconque des revendications, dans lesquels le fait de déterminer si l'au moins un bloc de mémoire (160) est éligible pour une vérification comprend le fait de déterminer si l'au moins un bloc de mémoire (160) est NUL.

15. Procédé, système ou un ou plusieurs supports de stockage lisibles par ordinateur selon l'une quelconque des revendications précédentes, dans lesquels le fait de déterminer si l'au moins un bloc de mémoire (160) peut être écrit comprend le fait de valider par le processeur (115) si un compteur d'écriture pour un mappage de page est capable ou non de s'incrémenter, le bloc de mémoire (160) étant déterminé pour être à lecture seule si le compteur d'écriture n'est pas capable de s'incrémenter.
